# EUROPEAN PATENT SPECIFICATION

(11) **EP 2 613 634 B1**
(45) Date of publication and mention of the grant of the patent: **30.03.2016**
(21) Application number: 11757261.0
(22) Date of filing: 09.09.2011
(51) Int. Cl.: A01N 57/20, A01N 25/00, A01N 31/02

(54) **HERBICIDAL COMPOSITION & USE THEREOF**
HERBIZIDE ZUSAMMENSETZUNG UND DEREN VERWENDUNG
COMPOSITION HERBICIDE ET SON UTILISATION

(30) Priority: 10.09.2010 GB 201015167
(43) Date of publication of application: 17.07.2013
(73) Proprietor: Syngenta Participations AG, 4058 Basel (CH)
(72) Inventor: CUSH, Randall, Charles, Greensboro, North Carolina 27409 (US); KOTZIAN, Georg, Rüdiger, 4058 Basel (CH); POPP, Christian, 4332 Stein (CH); OPALSKI, Krystyna, 4058 Basel (CH)
(74) Representative: Syngenta International AG
(86) International application number: PCT/EP2011/065605
(87) International publication number: WO 2012/032139

(56) References cited:
- EP-A2- 0 852 113
- WO-A1-03/082009
- US-A- 5 663 117
- US-A1- 2006 063 678

## Description

The present invention relates to the use of a branched-chain alcohol ethoxylate adjuvant as a rapid visual indicator of a locus of glyphosate treatment.

Glyphosate is a well-known established broad-spectrum non-specific herbicide. Routinely formulations comprising glyphosate are applied by spray to the foliar tissue of unwanted plants and although glyphosate provides highly effective control of such unwanted plants, its uptake into the plants is relatively slow. Consequentially, visual symptoms of phytotoxicity or burndown are also delayed and typically do not appear until 7 to 10 days after treatment. In several sectors of the herbicide market, in particular in lawn and garden, this delay in the appearance of phytotoxic symptoms may have several disadvantages in that it may give rise to a misconception that the product is not working, and furthermore it is difficult for the user to assess rapidly whether he has treated all of the area where his unwanted plants are growing.

These disadvantages have been addressed by providing herbicidal compositions of glyphosate and a further herbicide, wherein the further herbicide provides for early visible burndown symptoms yet still allows for sufficient uptake of glyphosate to maintain long term glyphosate-mediated weed control: US5532205 describes a herbicidal composition comprising (i) N-phosphonomethylglycine or an agriculturally acceptable salt thereof in combination with (ii) paraquat or diquat or a mixture thereof and (iii) a herbicide which functions as a photosystem II inhibitor. US7008904 describes herbicidal compositions of glyphosate, a bipyridilium (such as diquat or paraquat) and a surfactant that is of a type and present in a concentration sufficient to allow the plant to uptake a herbicidally effective amount of glyphosate prior to the substantial onset of bipyridilim induced leaf damage that would prevent or severely reduce further uptake of glyphosate by the plant. US2006/0063678 describes aqueous herbicidal glyphosate compositions comprising glyphosate, pelargonic acid and a nonionic surfactant component comprising certain water-soluble alkoxylated alcohols.

The present invention is based on the unexpected finding that certain branched chain alcohol ethoxylate adjuvants, when applied in combination with glyphosate are capable of acting as rapid visual indicators of glyphosate treatment. The compositions used in the present invention not only provide rapid symptoms of phytoxicity whilst preserving prolonged control in plants treated with said compositions, but also have an enhanced safety and toxicity profile in comparison to compositions of the prior art comprising bipyridilium herbicides. Furthermore, since the rapid symptomology is not effected by a second herbicide, formulations used in the present invention are simplified.

A further aspect of the invention relates to the use of a branched chain alcohol ethoxylate, in admixture with glyphosate, as a visual indicator of the locus of glyphosate treatment.

Branched chain alcohol ethoxylate molecules for use in the invention will be of general formula R¹-O(CH₂CH₂O)_{y}-H, wherein y is an integer between 2 and 15 inclusive, and R¹ is a branched C₈-C₁₈ alkyl chain, with the exclusion of 2,4,6,8,-tetramethylnonyl alcohol ethoxylate with 7 moles of ethoxylation.

In preferred embodiments R¹ is a C₁₀-C₁₆ alkyl chain, preferably a C₁₂-C₁₆ alkyl chain, more preferably a C₁₂-C₁₄ alkyl chain, and most preferably a C₁₃ alkyl chain.

As stated above, branched chain alcohol ethoxylates for use in the invention may be ethoxylated to different extents: they will contain between 2 and 15 moles of ethoxylation (i.e. y in formula (I) denotes the number of moles of ethoxylation, and is between 2 and 15 inclusive). In preferred embodiments y is an integer between 5 and 15 inclusive, more preferably between 5 and 8 inclusive, and most preferably 6 or 8.

Examples of particularly useful branched chain alcohol ethoxylates for use in the invention include iso-tridecyl alcohol polyglycol ethoxylates with 2, 5, 6, 8, or 15 moles of ethoxylation. These are commercially available from Clariant under the trade names of Genapol™ X 020, Genapol™ X 050, Genapol™ X 060, Genapol™ X 080 and Genapol™ X 150 respectively.

Branched chain alcohol ethoxylates as described above, may be employed in any aspect of the invention as appropriate at any suitable concentration above 1%w/v, up to about 40%w/v. Preferred concentrations are 1.25%, 1.5%, 1.75%, 2.0%, 2.5%, 2.75%, 3%, 5%, 10%, 15%, 20%, 25%, 30% or 40% w/v.

Compositions used in the invention may be in the form of a ready-to-use (RTU) composition, which is suitable for direct application without requiring further dilution. Typically such compositions will comprise more than 1% and less than or equal to 5%w/v, preferably more than 1 % but less than or equal to 3%w/v, more preferably between approximately 1.75% and 2.5% w/v inclusive. In particular embodiments such ready-to-use compositions comprise approximately 1.25%, 1.5%, 1.75%, 2.0%, 2.5%, 2.75%, 3%, or 5% w/v branched chain alcohol ethoxylate.

Compositions used in the invention may also be in the form of a concentrate, which when diluted for use comprises more than 1% but less than or equal to 5%w/v branched chain alcohol ethoxylate. Concentrate compositions used in the invention will preferably comprise at least 5%, and may contain 10%, 15%, 20%, 25%, 30% or 40% w/v. Preferably diluted concentrate compositions (i.e. compositions in use) will comprise more than 1% but less than equal to 3% w/v branched chain alcohol ethoxylate.

Compositions used in the invention not only comprise a branched chain alcohol ethoxylate as described hereinbefore, but also glyphosate. The term glyphosate as used herein includes N-(phosphonomethyl)glycine, as well agronomically acceptable salts, adducts, or esters thereof. In particular the term glyphosate encompasses the potassium, monoammonium, diammonium, sodium, monoethanolammonium, n-propylammonium, iso-propylammonium, ethylammonium, dimethylammonium, ethylenediamine, butylamine, monoisopropylamine, hexamethylenediamine and trimethylsulfonium salts of N-(phosphonomethyl)glycine.

Compositions used in the invention, in particular ready-to-use compositions, are of particular use in the lawn & garden market. Typically ready-to-use compositions will comprise between about 0.7% and 1.0%w/v glyphosate, depending upon the salt of glyphosate employed, and in particular may comprise 0.72%w/v acid equivalent (a.e.), 0.83% w/v (a.e), or 0.97% w/v isopropylamine salt of glyphosate. With respect to concentrates, these typically contain between about 15% to 50% w/v glyphosate, and in particular may contain 15.3%w/v a.e. 36% w/v a.e. or 50% w/v a.e. glyphosate.

Although of particular use in the lawn & garden arena, compositions used in the invention may be used as non-selective herbicides for the control of unwanted plants in the crop production arena. Where compositions of the invention are employed on such a large scale the glyphosate application rate, in terms of glyphosate acid equivalent (a.e.) may vary depending on, for example species, age, stress, time of year, crop rotation, biotype etc., but common rates include 560 g. a.e./ha, 1120 g a.e./ha, and 1680 g a.e./ha.

Branched chain alcohol ethoxylates as described herein are capable of conferring rapid symptomology to herbicidal compositions comprising glyphosate. The phrase "rapid symptomology" as used herein means the ability to produce visual symptoms of phytotoxicity (for example wilting, browning, desiccation, bleaching, necrosis, or any other visual symptom of injury) on treated plants, in a time period after treatment within which glyphosate *per se* is typically incapable of producing such symptoms. As stated *supra* glyphosate does not typically produce any visual symptoms of phytotoxicity until 7-10 days after treatment. Accordingly, symptoms appearing within 5 days of treatment, preferably within 48 hours of treatment, more preferably within 24 hours of treatment and most preferably within 12 hours of treatment, are considered as appearing "rapidly".

Thus in a further aspect of the invention there is provided a method of indicating the locus of glyphosate treatment, said method comprising applying a branched chain alcohol ethoxylate in admixture with glyphosate to unwanted plants at a locus at which the unwanted plants are growing, and visually assessing said locus within a time period of less than 5 days after treatment, wherein the presence of plants exhibiting visual symptoms of phytotoxicity is indicative that said locus has been treated with a composition comprising glyphosate.

Branched chain alcohol ethoxylates, and the concentration thereof and of glyphosate that is admixed in the above method are preferably as described *supra* in respect of compositions of the invention. In preferred embodiments visual assessment of the locus at which unwanted plants are growing will be carried out within a time period of 48 hours or less from treatment, preferably 24 hours or less from treatment, and most preferably 12 hours of less from treatment.

As mentioned hereinbefore, compositions used in the invention are of use in controlling unwanted plant growth. Thus in a further aspect there is provided a method of controlling unwanted plant growth, which comprises applying to said unwanted plants a composition as described hereinbefore. An unwanted plant is any plant growing at a locus where the user of the composition does not wish it to grow. Thus unwanted plants include monocot and dicot weeds (i.e. grasses, sedges, and broadleaf weeds), as well as crop plants growing as volunteers or escapes. Compositions of the invention are particularly useful in controlling (and exhibiting rapid symptomology in) a broad spectrum of unwanted plants, including for example, *Abutilon threophrasti, Amaranthus* spp., *Artemisia* spp., *Asclepias* spp., *Borreria* spp., *Brassica* spp., *Cirsium arvense, Commelina* spp., *Convolvuslus arvensis, Erodium* spp., *Helianthus* spp., *Ipomea* spp., *Kochia scoparia, Malva* spp., *Polygonum* spp., *Pteridium aquilinum, Pueraria* spp., *Rubus* spp., *Salsola* spp., *Sida* spp., *Sinapis arvensis, Stellaria* spp. (in particular *Stellaria media), Taraxacum officinale, Trifolium repens, Ulex europaeus, Urtica dioica, Veronica persica, Xanthium* spp., *Agropyron repens, Avena fatua, Axonopus* spp., *Brachiara* spp., *Bromus tectorum, Cynodon dactylon, Digitaria* spp., *Echinochloa* spp., *Eleusine indica, Elymus repens, Equisetum* spp., *Imperata cylindrica, Lolium multiflorum, Lolium perenne, Oryza sativa, Ottochloa nodosa, Panicum maximum, Paspalum dilatatum, Paspalum notatum, Phalaris* spp., *Phragamites* spp., *Poa annua, Setaria* spp., *Sorghum halepense, Triticum aestivum, Typha* spp., and Zea *mays.*

The term "plant" refers to all physical parts of a plant, including seeds, seedlings, saplings, roots, tubers, stems, stalks, foliage and fruits.

In order to act as an indicator of the locus of glyphosate treatment, a branched chain alcohol ethoxylate, preferably as described hereinbefore, will be applied in admixture with glyphosate to said unwanted plants through any appropriate method known to the skilled man. Similarly, in order to control unwanted plant growth, compositions used in the invention will be applied to said unwanted plants through any appropriate method known to the skilled man. Typically application to unwanted plants will be by spray to foliar tissue.

A ready-to-use composition used in the invention is packaged in a portable container suitable for hand carry (or suitable for carrying on the back), said container being fitted with apparatus for releasing said composition from the container onto the foliage of the unwanted plants in the form of a spray.

Glyphosate and the branched chain alcohol ethoxylate will be packaged separately (for example as a combi-pack), and the packages may be arranged such that the branched chain alcohol ethoxylate and glyphosate can be admixed immediately prior to application.

Compositions used in the invention may be formulated in any suitable manner known to the man skilled in the art. For example, branched chain alcohol ethoxylates may readily be combined with or included within known glyphosate formulations. Typically such formulations will also comprise ammonium sulphate.

Compositions and/or formulations used in the invention may comprise an additional herbicidal agent and/ or an additional rapid symptomology component. However, it is preferred that the branched chain alcohol ethoxylate will be the main (particularly preferably, the sole) component conferring rapid symptomology upon compositions of the invention, and it is further preferred that glyphosate will be the major herbicidal component to confer prolonged weed control effects on compositions of the invention. In the most preferred embodiments rapid symptomology will be conferred solely by the branched chain alcohol ethoxylate and prolonged weed control will be conferred solely by glyphosate.

It should also be appreciated that the invention extends to the use of compositions comprising more than one branched chain alcohol ethoxylate. In such compositions the combined concentration of branched chain alcohol ethoxylate will be greater than 1% w/v, and preferably the combined concentration will be as stated *supra* in respect of an individual branched chain alcohol ethoxylate. More preferably each branched chain alcohol ethoxylate will be at a concentration greater than 1%w/v, or as stated above.

### EXAMPLES

### Example 1 Effect of different adjuvants on weed species: comparison of different types of adjuvant

The effect of different adjuvants (see Table 1below) on the growth of broadleaf weed and grass species was investigated and compared to untreated (water only) control weeds.

**Table 1 Adjuvants tested**

| **Trade name** | **Source** | **Description** |
|---|---|---|
| Genapol™ 0050 | Clariant | Oleyl alcohol polyglycol ether with 5 moles of ethoxylation |
| Genapol™ O100 | Clariant | Oleyl alcohol polyglycol ether with 10 moles of ethoxylation |
| Genapol™ 0150 | Clariant | Oleyl alcohol polyglycol ether with 15 moles of ethoxylation |
| Genapol™ 0200 | Clariant | Oleyl alcohol polyglycol ether with 20 moles of ethoxylation |
| Genapol™ X060 | Clariant | Iso-tridecyl alcohol polyglycol ether with 6 moles of ethoxylation |
| Genapol™ X150 | Clariant | Iso-tridecyl alcohol polyglycol ether with 15 Moles of ethoxylation |
| AGNIQUE PG8107-G/-U | Cognis | C₈-C₁₀ alkyl polyglucoside |
| EMULSOGEN™ EL 360 | Clariant | Castor oil ethoxylate with 36 Moles of ethoxylation |
| SAPOGENAT™ T 060 | Clariant | Tri-sec-butylphenol polyglycol ether with 6 Moles of ethoxylation |
| MergeT™ | BASF | Surfactant blend with petroleum hydrocarbons |
| GENOL PLANT/ Sanoplant (Sanoplant winteröl) | Maag | Rapeseed oil based additive |

Plates, each with 48 pots measuring 2.7 cm diameter and 5 cm deap, were filled with TKS1 growing media (Floragard, Germany). Seeds of *Taraxacum officinale, Stellaria media* or *Poa annua* were sown on the surface (10 to 20 per pot). Plants were grown in glasshouse at a temperature of 18 to 20°C and at 60% relative humidity.

Plants were treated 15 (*Stellaria*, *Poa)* and 34 *(Taraxacum)* days after sowing with 60 µl of a 1.25, 2.5, 5 and 10% (w/v) solution of adjuvant using a hand airbrush.

Visual assessment of the percentage damage to the plant was carried out 1 day and 6 days from application.

Damage was assessed as wilting, desiccation or any other kind of visual injury in comparison to the untreated control (water only). The results are shown in Table 2 below.

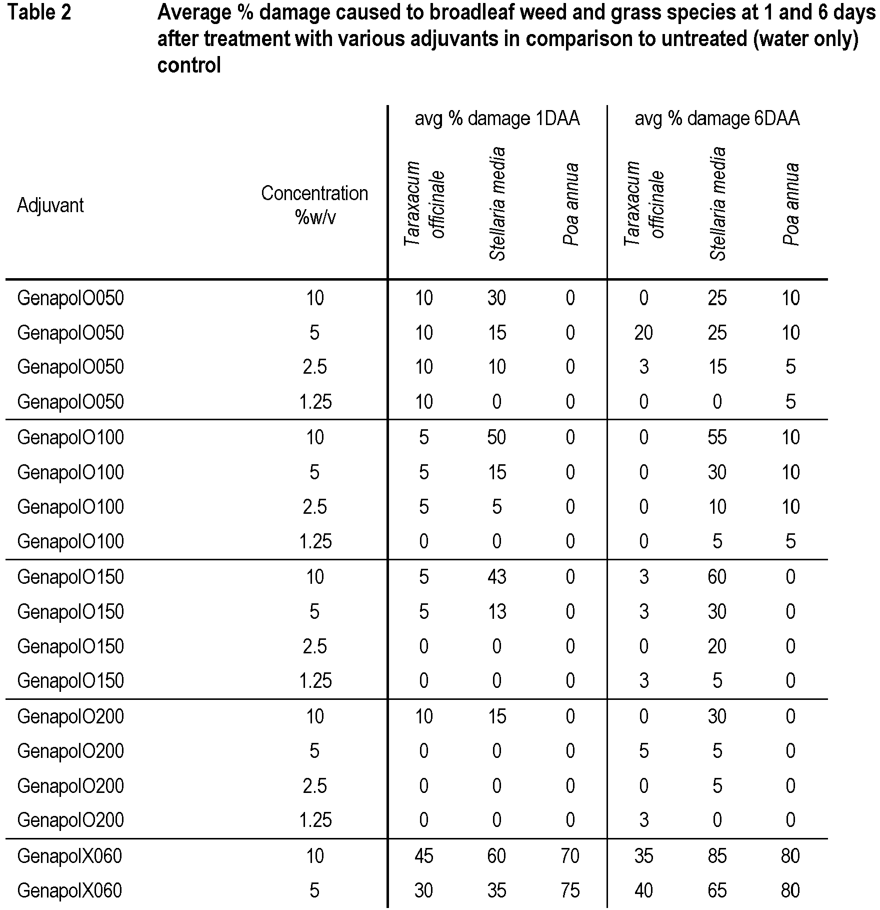

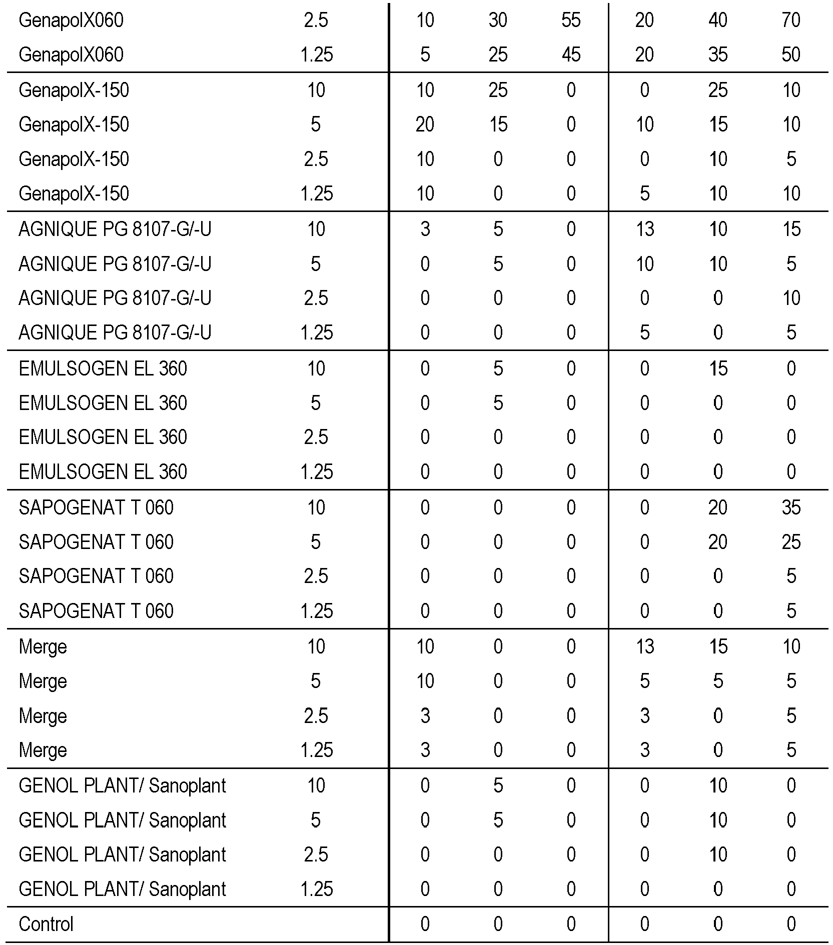

Surprisingly branched chain alcohol ethoxylate adjuvants (Genapol™ X060 and Genapol™ X150) gave a comparatively high level of visual symptoms of phytoxicity in both broadleaf weeds and grasses at 1 and 6 days after treatment, in comparison to linear alcohol ethoxylate and other classes of adjuvant, which gave little or no visual symptoms of phytotoxicity.

### Example 2 Effect of different alcohol ethoxylate adjuvants on weed species

The effect of different types of alcohol ethoxylate (branched - Genapol X-series, and unbranched - Genapol O-series, differing degrees of ethoxylation, see Table 3 below for more details), on unwanted vegetation (broadleaf weed and grass species), in the absence of glyphosate, was investigated and compared to untreated (water only) control weeds.

**Table 3 Alcohol ethoxylate adjuvants tested**

| **Trade name** | **Source** | **Description** |
|---|---|---|
| Genapol™ 0020 | Clariant | Oleyl alcohol polyglycol ether with 2 moles of ethoxylation |
| Genapol™ 0050 | Clariant | Oleyl alcohol polyglycol ether with 5 moles of ethoxylation |
| Genapol™ 0080 | Clariant | Oleyl alcohol polyglycol ether with 8 moles of ethoxylation |
| Genapol™ X020 | Clariant | Iso-tridecyl alcohol polyglycol ether with 2 moles of ethoxylation |
| Genapol™ X060 | Clariant | Iso-tridecyl alcohol polyglycol ether with 6 moles of ethoxylation |
| Genapol™ X080 | Clariant | Iso-tridecyl alcohol polyglycol ether with 8 moles of ethoxylation |

Troughs (measuring 16cm by 13 cm by 5 cm⁾ were filled with local field soil. Seeds of *Veronica persica, Stellaria media, Trifolium repens* and *Poa annua* were sown 24 days before application of test samples. Plants were grown in the glasshouse at 18 to 20°C and 60% relative humidity. Application of alcohol ethoxylate test samples was carried out using a tracksprayer, spraying at a rate of 300 I/ha. Plants were kept in glasshouse and visual assessment of the estimated percentage damage to the plant was carried out 1, 7, and 14 days from application.

Damage was assessed as wilting, desiccation or any other kind of visual injury in comparison to the untreated control (water only). The results are summarized in Table 4 below.

The data shows that in the linear (unbranched) alcohol ethoxylate adjuvants (Genapol™ O series) had little or no effect on the weed species tested at any of the time points analysed.

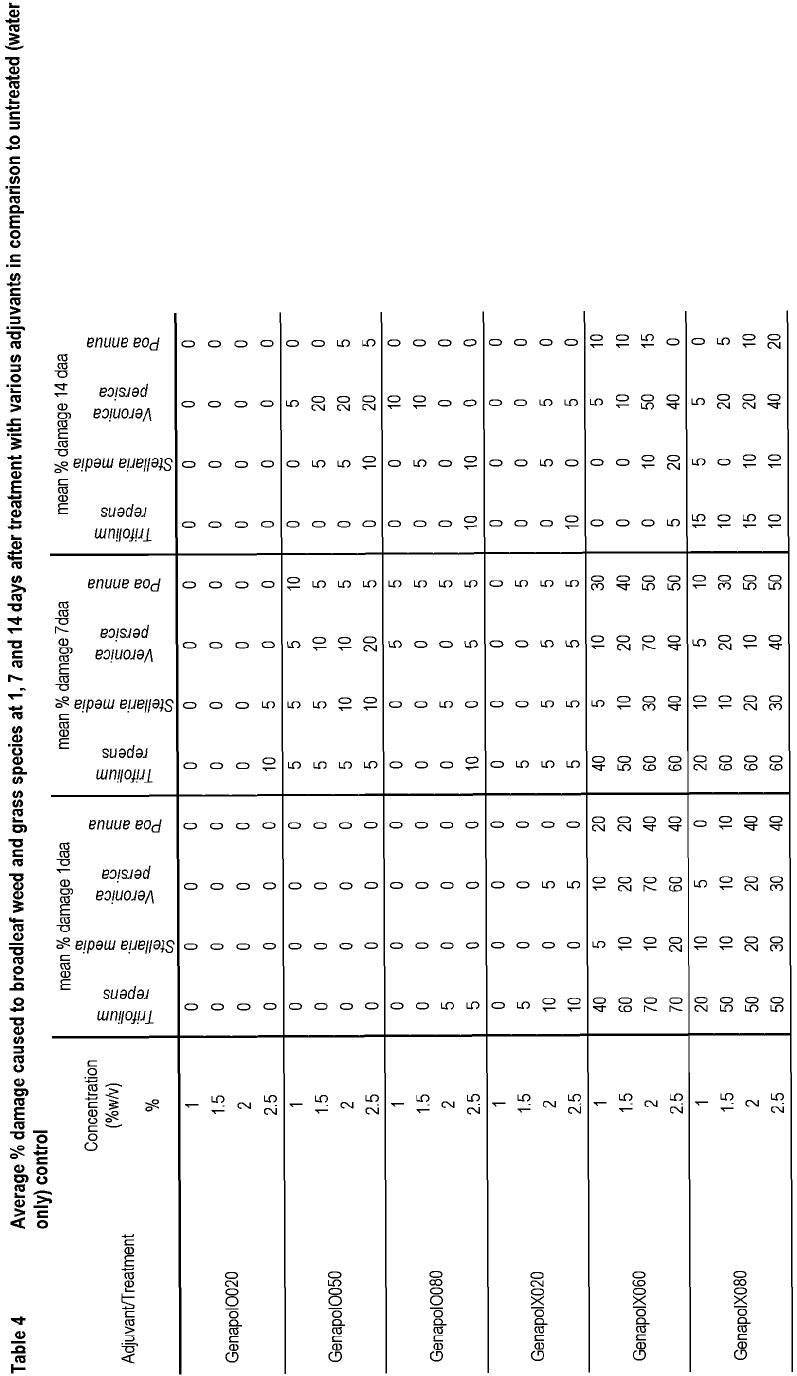

In comparison, (in particular for a given degree of ethoxylation) the branched chain alcohol ethoxylate adjuvants in general demonstrated a greater degree of phytoxicity at each time point.

The data also shows that whilst plants treated with Genapol™ X060 and Genapol™ X080 (in the absence of glyphosate) exhibit symptoms of a phytotoxicity at all time points, the level of damage decreases from day 14 onwards, as the plants begin to recover.

### Example 3 Effect on weeds of branched chain alcohol ethoxylate adjuvants in admixture with glyphosate

The effects of different branched chain alcohol ethoxylates in admixture with glyphosate on both Dandelions and a mixture of grasses were investigated.

Dandelion samples and a mixture of grasses obtained from a meadow environment were planted into square 20 cm pots and kept and grown on in glasshouse for at least 2 weeks (18 to 20°C, 60% relative humidity).

Application of branched chain alcohol ethoxylate was carried out using a tracksprayer, spraying at a rate of 600 I/ha.

Visual assessment of the estimated percentage damage to the plant was carried out 1, 6, 13, and 20 days from application.

Damage was assessed as wilting, desiccation or any other kind of visual injury in comparison to the untreated control (water only). The results are summarised in Table 5 below.

The data shows that the branched chain alcohol ethoxylate adjuvants tested are as effective at providing rapid symptomology as the commercially available "fast-acting" glyphosate compositions wherein rapid symptomology is brought about via a second herbicide (i.e. diquat or pelargonic acid).

The data also shows that whilst plants treated with Genapol X060 in the absence of glyphosate exhibit symptoms of a phytotoxicity at all time points, the level of damage decreases from day 13 onwards, as the plants begin to recover.

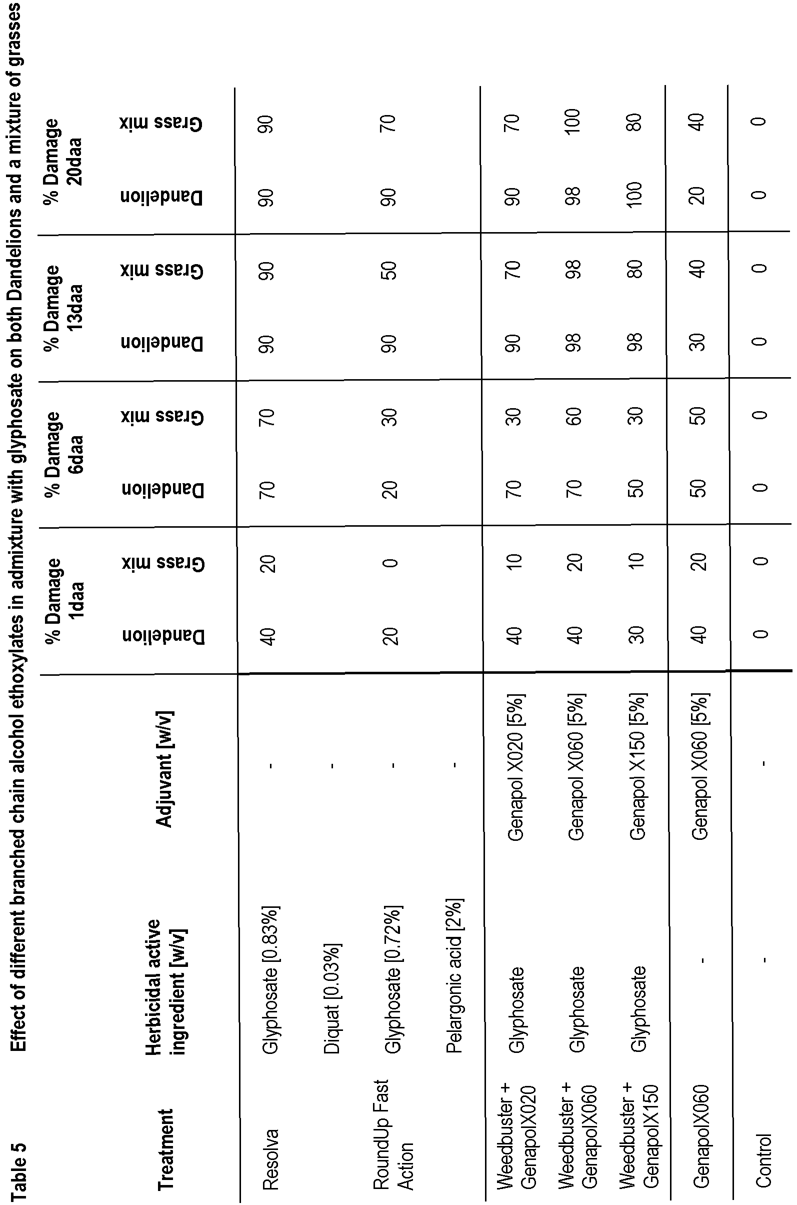

### Example 4 Effect on weeds of different concentrations of branched chain alcohol ethoxylate in presence and absence of glyphosate

The effect on broadleaf weeds and grasses of different concentrations of Genapol™ X060 (iso-tridecyl alcohol polyglycol ether with 6 moles of ethoxylation) in admixture with glyphosate was investigated.

Troughs (measuring 55 cm by 9 cm by 8.5 cm) were filled with local field soil. Seeds of *Taraxacum offcinale, Urtica dioica, Trifolium repens* and *Poa annua* were sown 41 days before application of test samples, and seeds of *Stellaria media, Veronica persica, Agropyron repens* and *Lolium multiflorum* were sown 24 days before application of test samples. Plants were grown in the glasshouse at 18 to 20°C and 60% relative humidity. One week before application of test samples, troughs were placed outside (but covered).

Application of test samples was carried out using a tracksprayer, spraying at a rate of 300 I/ha. Treated plants were kept outside and visual assessment of the percentage damage to the plants was carried out at 1, 7, 14, and 21 days after application.

Damage was assessed as wilting, desiccation or any other kind of visual injury in comparison to the untreated control (water only). The results are summarised in Table 6 below.

The results show that admixture of Genapol™X060 at a concentration of 2.5% w/v with glyphosate (in the form of Weedbuster) provided for more rapid symptomology against all weeds in comparison to Roundup, and for more rapid symptomology against most weeds in comparison to Weedbuster. Even at its lowest concentration, Genapol™X060 conferred more rapid symptomology than either Roundup or Weedbuster against some weeds. Furthermore, particularly at higher concentrations, the effect of Genapol™X060 in combination with glyphosate is comparable to the effect of Roundup Fast Action and Resolva.

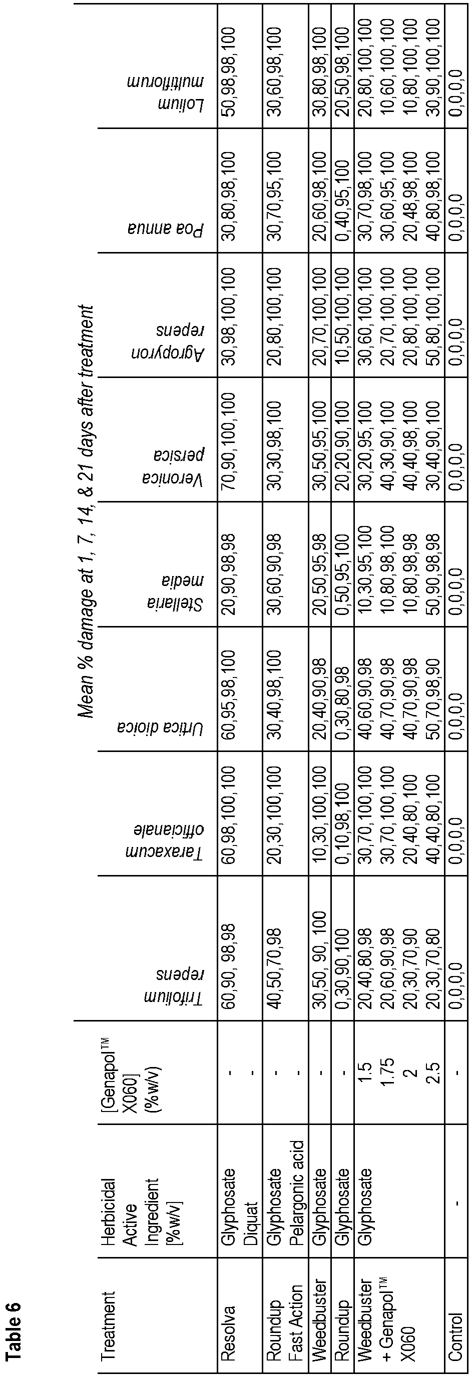

## Claims

1. A method of indicating the locus of glyphosate treatment, said method comprising applying a branched chain alcohol ethoxylate in admixture with glyphosate to unwanted plants at a locus at which the unwanted plants are growing, and visually assessing said locus within a time period of less than 5 days after treatment, wherein the presence of plants exhibiting visual symptoms of phytotoxicity is indicative that said locus has been treated with a composition comprising glyphosate.

2. The method according to claim 1, wherein the admixture of glyphosate and a branched chain alcohol ethoxylate is in the form of a composition comprising glyphosate and a branched chain alcohol ethoxylate molecule of general formula (I)
R¹-O(CH₂CH₂O)_{y}-H (I)
wherein y is an integer between 2 and 15 inclusive, and
R¹ is a branched C₈-C₁₈ alkyl chain, and wherein said composition comprises the branched chain alcohol ethoxylate at a concentration greater than 1%w/v,with the exclusion of 4,6,8,-tetramethylnonyl alcohol ethoxylate with 7 moles of ethoxylation.

3. The method according to claim 2, wherein the admixture of glyphosate and a branched chain alcohol ethoxylate is in the form of a composition wherein y is an integer between 5 to 8 inclusive, and R¹ is a branched C₁₂-C₁₄ alkyl chain.

4. The method according to claim 2 or claim 3, wherein the locus is visually assessed within 24 hours of treatment.

## Patentansprüche

1. Verfahren zum Anzeigen des Orts einer Glyphosat-Behandlung, wobei man bei dem Verfahren ein verzweigtkettiges Alkoholethoxylat in Abmischung mit Glyphosat auf unerwünschte Pflanzen an einem Ort, an dem die unerwünschten Pflanzen wachsen, ausbringt und den Ort visuell innerhalb eines Zeitraums von weniger als fünf Tagen nach der Behandlung visuell beurteilt, wobei das Vorliegen von Pflanzen, die visuelle Phytotoxizitätssymptome aufweisen, anzeigt, dass der Ort mit einer Zusammensetzung, die Glyphosat umfasst, behandelt worden ist.

2. Verfahren nach Anspruch 1, wobei die Abmischung von Glyphosat und einem verzweigtkettigen Alkoholethoxylat in Form einer Zusammensetzung vorliegt, die Glyphosat und ein verzweigtkettiges Ethoxylatmolekül der allgemeinen Formel (I)
R¹-O(CH₂CH₂O)_{y}-H (I)
wobei y eine ganze Zahl zwischen und einschließlich 2 und 15 bedeutet und
R¹ eine verzweigte C₈-C₁₈-Alkylkette bedeutet, umfasst, und wobei die Zusammensetzung das verzweigtkettige Alkoholethoxylat in einer Konzentration von mehr als 1% w/v umfasst, mit Ausnahme von 4,6,8,-Tetramethylnonylalkoholethoxylat mit 7 Mol Ethoxylierung.

3. Verfahren nach Anspruch 2, wobei die Abmischung von Glyphosat und einem verzweigtkettigen Alkoholethoxylat in Form einer Zusammensetzung vorliegt, in der y eine ganze Zahl zwischen und einschließlich 5 bis 8 bedeutet und R¹ eine verzweigte C₁₂-C₁₄-Alkylkette bedeutet.

4. Verfahren nach Anspruch 2 und Anspruch 3, wobei der Ort innerhalb von 24 Stunden nach der Behandlung visuell beurteilt wird.

## Revendications

1. Méthode d'indication du locus d'un traitement par glyphosate, ladite méthode comprenant l'application d'un éthoxylate d'alcool à chaîne ramifiée en mélange avec un glyphosate à des végétaux non souhaités au niveau d'un locus où les végétaux non souhaités croissent, et l'évaluation visuelle dudit locus pendant une période de moins de 5 jours après traitement, où la présence de végétaux présentant des symptômes visuels de phytotoxicité indiquant que ledit locus a été traité par une composition comprenant le glyphosate.

2. Méthode selon la revendication 1, où le mélange de glyphosate et d'un éthoxylate d'alcool à chaîne ramifiée se présente sous la forme d'une composition comprenant le glyphosate et une molécule d'éthoxylate d'alcool à chaîne ramifiée de formule générale (I)
R¹-O(CH₂CH₂O)_{y}-H (I)
où y représente un entier compris entre 2 et 15 inclus, et
R¹ représente une chaîne alkylique en C₈-C₁₈ ramifiée, et où ladite composition comprend l'éthoxylate d'alcool à chaîne ramifiée à une concentration supérieure à 1 % en masse par volume, à l'exclusion de l'éthoxylate d'alcool de 4,6,8-tétraméthylnonyle avec 7 moles d'éthoxylation.

3. Méthode selon la revendication 2, où le mélange de glyphosate et d'un éthoxylate d'alcool à chaîne ramifiée se présente sous la forme d'une composition où y représente un entier compris entre 5 et 8 inclus, et R¹ représente une chaîne alkylique en C₁₂-C₁₄ ramifiée.

4. Méthode selon la revendication 2 ou la revendication 3, où le locus est évalué visuellement dans les 24 heures qui suivent le traitement.
